(19) Europäisches Patentamt / European Patent Office / Office européen des brevets

(11) **EP 4 484 382 B1**

(12) **FASCICULE DE BREVET EUROPEEN**

(45) Date de publication et mention de la délivrance du brevet:
**11.02.2026 Bulletin 2026/07**

(21) Numéro de dépôt: **24184861.3**

(22) Date de dépôt: **27.06.2024**

(51) Classification Internationale des Brevets (IPC):
*C02F 1/467* (2023.01)  *C02F 1/00* (2023.01)
*C02F 1/76* (2023.01)  *C02F 1/68* (2023.01)
*C02F 103/42* (2006.01)

(52) Classification Coopérative des Brevets (CPC):
**C02F 1/4674; C02F 1/008; C02F 1/76;** C02F 1/686;
C02F 2103/42; C02F 2209/006; C02F 2209/02;
C02F 2209/04; C02F 2209/29

(54) **INSTALLATION ET PROCÉDÉ POUR LA CHLORATION DE L'EAU D'UNE PISCINE**

ANLAGE UND VERFAHREN ZUR CHLORIERUNG VON WASSER IN EINEM SCHWIMMBECKEN

PROCESS AND SYSTEM FOR THE CHLORINATION OF WATER IN A SWIMMING POOL

(84) Etats contractants désignés:
AL AT BE BG CH CY CZ DE DK EE ES FI FR GB GR HR HU IE IS IT LI LT LU LV MC ME MK MT NL NO PL PT RO RS SE SI SK SM TR

(30) Priorité: **29.06.2023 FR 2306840**

(43) Date de publication de la demande:
**01.01.2025 Bulletin 2025/01**

(73) Titulaire: **ACWA Groupe**
**44310 Saint-Philbert-de-Grand-Lieu (FR)**

(72) Inventeur: **COTTREAU, Yann**
**83330 LE BEAUSSET (FR)**

(74) Mandataire: **Jacobacci Coralis Harle**
**32, rue de l'Arcade**
**75008 Paris (FR)**

(56) Documents cités:
**EP-A1- 2 273 039  FR-A1- 3 069 860**

**Description**

Domaine technique de l'invention

La présente invention concerne le domaine technique des installations pour la chloration de l'eau d'une piscine.

Etat de la technique

Les piscines sont des installations récréatives populaires et la qualité de leur eau est d'une importance capitale pour protéger la santé des nageurs.
Une méthode largement utilisée pour maintenir la qualité de l'eau consiste à ajouter des composés de chlore, qui désinfectent efficacement l'eau en éliminant les micro-organismes nocifs.
Pour la chloration de l'eau, les installations actuelles s'appuient sur différentes technologies, en particulier les électrolyseurs.
Le fonctionnement de l'électrolyseur consiste à faire circuler un courant électrique entre deux plaques de platine (cellule d'électrolyse) de manière à produire du chlore à partir du sel dissout dans l'eau.
Ce type d'équipement est très rependu mais présente toutefois quelques limites :

- l'électrolyseur a une capacité de production de chlore finie : en cas de canicule, d'orage ou d'utilisation intensive de la piscine, il peut arriver que le chlore produit ne suffise pas à traiter l'eau ;
- la durée de vie des électrodes est limitée (usure lors de la production) ;
- plus la température de l'eau est basse, moins la production de chlore est efficace et plus les électrodes s'usent rapidement.

En particulier, il est habituel d'arrêter la production de chlore par l'électrolyseur lorsque la température de l'eau est inférieure à une valeur seuil minimale (par exemple 15°C) pour ne pas détériorer inutilement les électrodes.
Certaines installations de chloration intègrent alors une pompe doseuse complémentaire, qui est utilisée en dessous de la valeur seuil minimale, en lieu et place de la production de chlore par l'électrolyseur.
De telles pompes doseuses sont ainsi utilisées pour injecter avec précision des produits chimiques de chloration dans l'eau de la piscine afin de maintenir les niveaux appropriés de chlore.
Mais, en pratique, la limite entre la température de dégradation rapide, d'une part, et le fonctionnement nominale des électrodes d'un électrolyseur, d'autre part, n'est pas limitée à une valeur seuil minimale.
Il existe par conséquent un besoin d'une solution technique qui permettrait de pallier les limites des électrolyseurs, notamment en lien avec les seuils de températures.
Les documents FR3069860A1, EP2273039A1 et FR3119186A1 concernent des installations dédiées à la chloration de l'eau des piscines.

Présentation de l'invention

Afin de remédier à l'inconvénient précité de l'état de la technique, la présente invention propose une installation pour la chloration de l'eau d'une piscine.
Cette installation de chloration comprend :

- des moyens de chloration, pour l'apport de chlore dans ladite eau, comprenant :

  -- des moyens électrolyseurs, par exemple un électrolyseur pour piscine, et
  -- des moyens injecteurs raccordés à un réservoir de chlore, par exemple une pompe doseuse de chlore liquide,

- des moyens capteurs de température, pour mesurer une valeur collectée de température de l'eau de ladite piscine,
- des moyens de mesure du taux de chlore, pour mesurer une teneur collectée en chlore de l'eau de ladite piscine, et
- des moyens de commande, comprenant :

  -- un module de calcul, pour déterminer une quantité de chlore à apporter tenant compte de ladite teneur collectée en chlore et d'une teneur consigne en chlore, et
  -- un module de pilotage, pour piloter lesdits moyens de chloration en fonction de ladite quantité de chlore à apporter.

Et, selon l'invention, ledit module de pilotage est configuré pour répartir ladite quantité de chlore à apporter entre lesdits moyens électrolyseurs et lesdits moyens injecteurs, tenant compte de ladite valeur collectée de température et de seuils de température de l'eau de ladite piscine, à savoir :

- une configuration injection, lorsque ladite valeur collectée de température est inférieure à un seuil minimal de température, dans laquelle lesdits moyens injecteurs sont pilotés pour apporter ladite quantité de chlore,
- une configuration électrolyseur, lorsque la valeur collectée de température est supérieure à un seuil maximal de température, dans laquelle lesdits moyens électrolyseurs sont pilotés pour produire ladite quantité de chlore, et
- une configuration hybride, lorsque la valeur collectée de température est comprise entre lesdits seuils de température, dans laquelle lesdits moyens électrolyseurs et lesdits moyens injecteurs sont pilotés pour apporter chacun une quote-part de ladite quantité de chlore,

ladite quote-part de la quantité de chlore produite par lesdits moyens électrolyseurs augmentant avec ladite valeur collectée de température.

Une telle solution technique permet d'éviter une commutation brutale entre les moyens électrolyseurs et les moyens injecteurs, à la température seuil minimale.

Au contraire, elle assure un passage progressif entre les moyens électrolyseurs et les moyens injecteurs, sur une plage comprise entre deux températures seuils.

D'autres caractéristiques non limitatives et avantageuses du produit/procédé conforme à l'invention, prises individuellement ou selon toutes les combinaisons techniquement possibles, sont les suivantes :

- le seuil minimal de température est de 14 à 16°C et le seuil maximal de température est de 19 à 21°C ;
- ledit module de pilotage est configuré pour augmenter de manière continue, ou de manière discontinue, ladite première quote-part Ca1 de la quantité de chlore produite par lesdits moyens électrolyseurs ;
- ledit module de pilotage est configuré pour augmenter de manière continue ladite première quote-part de la quantité de chlore à apporter produite par lesdits moyens électrolyseurs, parmi une augmentation continue linéaire, une augmentation continue logarithmique, une augmentation continue exponentielle, une augmentation continue polynomiale ;
- ledit module de pilotage est configuré pour augmenter de manière discontinue ladite première quote-part de la quantité de chlore produite par lesdits moyens électrolyseurs, parmi des paliers, par exemple chaque degré de température ;
- les moyens de commande comprennent un module de calcul additionnel, pour déterminer une quantité de chlore additionnel à apporter, tenant compte d'au moins un paramètre additionnel, lequel paramètre additionnel est choisi par exemple parmi des conditions météorologiques qui ne permettent pas aux moyens électrolyseurs de contrer le développement de bactéries et algues, une utilisation intense de ladite piscine, le statut des moyens électrolyseurs, notamment des électrodes, en particulier en fin de vie, un taux de sel dans l'eau qui est inférieur à un seuil minimal ;
- les moyens de commande comprennent des moyens de mettre en œuvre les étapes suivantes : une étape de calcul de ladite quantité de chlore à apporter, tenant compte de ladite teneur collectée en chlore et d'une teneur consigne en chlore, une étape de chloration, tenant compte de ladite valeur collectée de température et desdits seuils de température, selon l'une des configurations choisies parmi ladite configuration injection, ladite configuration électrolyseur et ladite configuration hybride ;
- les moyens injecteurs sont raccordés à un réservoir de chlore.

La présente invention concerne encore une piscine équipée d'une installation pour la chloration de l'eau d'une piscine, selon l'invention.

La présente invention concerne aussi un procédé pour la chloration de l'eau d'une piscine, par la mise en œuvre d'une installation selon l'invention.

Ce procédé comprend :

- une étape de calcul de ladite quantité de chlore à apporter, tenant compte de ladite teneur collectée en chlore et d'une teneur consigne en chlore,
- une étape de chloration, tenant compte de ladite valeur collectée de température et desdits seuils de température, selon l'une des configurations suivantes :

  -- une configuration injection, lorsque ladite valeur collectée de température est inférieure audit seuil minimal de température, dans laquelle lesdits moyens injecteurs sont pilotés pour apporter ladite quantité de chlore à apporter,
  -- une configuration électrolyseur, lorsque la valeur collectée de température est supérieure audit seuil maximal de température, dans laquelle lesdits moyens électrolyseurs sont pilotés pour apporter ladite quantité de chlore à apporter, et

-- une configuration hybride, lorsque la valeur collectée de température est comprise entre lesdits seuils de température, dans laquelle lesdits moyens électrolyseurs et lesdits moyens injecteurs sont pilotés pour apporter chacun une quote-part de ladite quantité de chlore à apporter,

la quote-part de la quantité de chlore à apporter par lesdits moyens électrolyseurs augmentant avec ladite valeur collectée de température.

De préférence, le procédé comprend une étape de chloration complémentaire, tenant compte d'au moins un paramètre additionnel.

Ce paramètre additionnel est choisi par exemple parmi :

- des conditions météorologiques qui ne permettent pas aux moyens électrolyseurs de contrer le développement de bactéries et algues,
- une utilisation intense de ladite piscine,
- le statut des moyens électrolyseurs, notamment des électrodes, en particulier en fin de vie,
- un taux de sel dans l'eau qui est inférieur à un seuil minimal.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Description détaillée de l'invention

De plus, diverses autres caractéristiques de l'invention ressortent de la description annexée effectuée en référence aux dessins qui illustrent des formes, non limitatives, de réalisation de l'invention et où :

[Fig. 1] est une vue schématique, sous forme d'un schéma bloc, de l'installation de chloration selon l'invention ;
[Fig. 2] est une vue schématique, sous forme d'un schéma bloc, illustrant l'algorithme mis en œuvre par les moyens de commande ;
[Fig. 3] est une vue schématique, sous forme d'un schéma bloc, du procédé de chloration selon l'invention.

Il est à noter que, sur ces figures, les éléments structurels et/ou fonctionnels communs aux différentes variantes peuvent présenter les mêmes références.

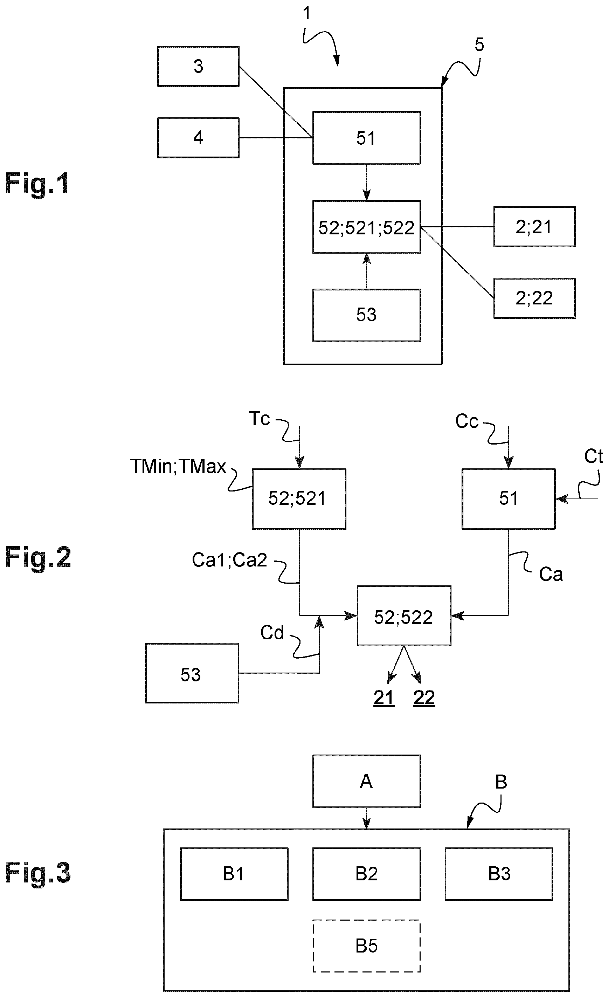

Tel que décrit en lien avec la figure 1, la présente invention concerne ainsi installation 1 pour la chloration de l'eau d'une piscine (non représentée). Une telle installation 1 est encore appelée « installation de chloration 1 ».

Par « installation de chloration », on entend avantageusement une installation prévue pour ajouter des composés de chlore dans l'eau de la piscine, afin de désinfecter efficacement l'eau en éliminant les micro-organismes nocifs.

De manière générale, l'installation de chloration 1 selon l'invention comprend :

- des moyens de chloration 2, pour apporter du chlore dans l'eau de la piscine,
- des moyens capteurs de température 3, pour mesurer une valeur collectée de température Tc de l'eau de la piscine,
- des moyens de mesure du taux de chlore 4, pour mesurer une teneur collectée en chlore Cc de l'eau de la piscine, et
- des moyens de commande 5, en particulier pour piloter les moyens de chloration 2 en fonction d'une quantité de chlore à apporter Ca et de la valeur collectée de température Tc.

Moyens de chloration

Selon la présente invention, les moyens de chloration 2 comprennent deux composants :

- des moyens électrolyseurs 21, et
- des moyens injecteurs 22.

Les moyens électrolyseurs 21, par exemple un électrolyseur pour piscine, sont avantageusement classiques en soi.

De tels moyens électrolyseurs 21 consistent avantageusement à faire circuler un courant électrique entre deux plaques de platine (cellule d'électrolyse) de manière à produire du chlore à partir de sel dissout dans l'eau.

Les moyens injecteurs 22, par exemple une pompe doseuse de chlore liquide, sont avantageusement classiques en soi.

Des moyens injecteurs 22 sont raccordés à un réservoir de chlore, pour la distribution d'une dose de chlore dans l'eau de la piscine.

De manière générale, les moyens de chloration 2 peuvent être positionnés sur le circuit de filtration de l'eau de la piscine.

## Moyens capteurs de température

Les moyens capteurs de température 3 sont avantageusement classiques en soi.

Par exemple, ces moyens capteurs de température 3 consistent par exemple en une thermistance ou un capteur de température numérique, plongé(e) dans l'eau de piscine ou installé(e) pour mesurer la température de l'eau dans les canalisations de circulation d'eau.

## Moyens de mesure du taux de chlore

Les moyens de mesure du taux de chlore 4 sont avantageusement classiques en soi.

Par exemple, ces moyens de mesure du taux de chlore 4 consistent en une sonde redox ou en une sonde de chlore.

## Moyens de commande

De préférence, les moyens de commande 5 comprennent un système de traitement de données comprenant des moyens de mettre en œuvre le procédé décrit par la suite.

De préférence encore, les moyens de commande 5 comprennent avantageusement un microcontrôleur dans lequel est stocké un programme d'ordinateur qui comprend des instructions qui, lorsque ledit programme d'ordinateur est exécuté par ledit microcontrôleur, conduisent celui-ci à piloter les moyens de chloration 2 selon un procédé décrit par la suite (dit encore « algorithme »).

Encore de manière générale, les moyens de commande 5 se présentent avantageusement sous la forme d'un automate programmable industriel, à savoir un dispositif électronique numérique programmable qui envoie des ordres vers les moyens de chloration 2 à partir de données d'entrées provenant de capteurs (notamment les moyens capteurs de température 3 et les moyens de mesure du taux de chlore 4), de consignes et d'un programme d'ordinateur.

Plus précisément, les moyens de commande 5 comprennent :

- un module de calcul 51, pour déterminer une quantité de chlore à apporter Ca tenant compte de la teneur collectée en chlore Cc et d'une teneur consigne en chlore Ct, et
- un module de pilotage 52, pour piloter les moyens de chloration 2 en fonction de la quantité de chlore à apporter Ca.

En particulier, le module de calcul 51 détermine la quantité de chlore à apporter Ca comme étant un différentiel entre la teneur collectée en chlore Cc et la teneur consigne en chlore Ct.

Par ailleurs, le module de pilotage 52 pilote le fonctionnement respectifs des moyens électrolyseurs 21 et des moyens injecteurs 22, pour atteindre la quantité de chlore à apporter Ca.

Selon l'invention, le module de pilotage 52 est configuré pour répartir la quantité de chlore à apporter Ca entre les moyens électrolyseurs 21 et les moyens injecteurs 22.

En ce sens, la quantité de chlore à apporter Ca est répartie en quotes-parts qui sont désignées respectivement par :

- une première quote-part Ca1, pour la quote-part de la quantité de chlore produite par les moyens électrolyseurs 21, par rapport à la quantité de chlore à apporter Ca, et
- une seconde quote-part Ca2, pour la quote-part de la quantité de chlore produite par les moyens injecteurs 22, par rapport à la quantité de chlore à apporter Ca.

De manière générale, chaque quote-part Ca1, Ca2 présente une valeur allant de 0% à 100%, par rapport à la quantité de chlore à apporter Ca. La somme des quotes-parts Ca1 et Ca2 est égale à 100% et correspond à la quantité de chlore à apporter Ca.

Pour cela, de préférence, le module de pilotage 52 pilote :

- le temps de fonctionnement des moyens électrolyseurs 21, pour obtenir la première quote-part Ca1, ou
- le volume de chlore à injecter par les moyens injecteurs 22, pour obtenir la seconde quote-part Ca2.

Pour piloter ces quotes-parts, le module de pilotage 52 comprend en particulier :

- une unité de calcul 521, configurée pour calculer la répartition de la quantité de chlore à apporter Ca, entre les moyens électrolyseurs 21 et les moyens injecteurs 22 (à savoir les quotes-parts Ca1 et Ca2 respectives), et
- une unité de pilotage 522, configurée pour piloter le fonctionnement respectif des moyens électrolyseurs 21 et des moyens injecteurs 22, tenant compte des quotes-parts Ca1, Ca2 précitées.

Le module de pilotage 52 consiste ainsi avantageusement en un programme d'ordinateur qui comprend des instructions qui, lorsque ledit programme d'ordinateur est exécuté, conduisent celui-ci à piloter les moyens de chloration 2 selon des configurations décrites par la suite.

En d'autres termes, le module de pilotage 52, et avantageusement l'unité de calcul 521, détermine automatiquement les quotes-parts Ca1 et Ca2 respectives.

Selon l'invention et tel que représenté schématiquement sur la figure 2, cette répartition de la quantité de chlore à apporter Ca (à savoir les quotes-parts Ca1 et Ca2 respectives) tient compte de la valeur collectée de température Tc et de seuils de température TMin, TMax de l'eau de ladite piscine.

De préférence, les seuils de température TMin, TMax sont choisis parmi :

- un seuil minimal de température TMin allant de 14 à 16°C, de préférence de 15°C, et
- un seuil maximal de température TMax allant de 19 à 21°C, de préférence de 20°C.

Plus précisément, le module de pilotage 52 (avantageusement via l'unité de calcul 521) est configuré pour répartir la quantité de chlore à apporter Ca selon trois configurations tenant compte de la valeur collectée de température Tc.

Premièrement, le module de pilotage 52 est piloté dans une configuration « injection » lorsque la valeur collectée de température Tc est inférieure à un seuil minimal de température TMin.

Les moyens injecteurs 22 sont alors pilotés pour apporter la quantité de chlore à apporter Ca.

La valeur de la seconde quote-part Ca2 est alors égale à la valeur Ca (la seconde quote-part Ca2 est égale à 100%) ; 100% du chlore est ainsi injecté par les moyens injecteurs 22. La valeur de la première quote-part Ca1 est nulle.

Deuxièmement, le module de pilotage 52 est piloté dans une configuration « électrolyseur » lorsque la valeur collectée de température Tc est supérieure à un seuil maximal de température TMax.

Les moyens électrolyseurs 21 sont alors pilotés pour produire la quantité de chlore à apporter Ca.

La valeur de première quote-part Ca1 est égale à la valeur de Ca (la première quote-part Ca1 est égale à 100%) ; 100% du chlore est produit par les moyens électrolyseurs 21. La valeur de seconde quote-part Ca2 est nulle.

Troisièmement, le module de pilotage 52 est piloté dans une configuration « hybride » lorsque la valeur collectée de température Tc est comprise entre les seuils de température TMin et Tmax.

Par « comprise », on englobe avantageusement une gamme de température allant du seuil de température minimal TMin au seuil de température maximal Tmax.

Les moyens électrolyseurs 21 et les moyens injecteurs 22 sont alors pilotés pour apporter chacun une quote-part de la quantité de chlore à apporter Ca (la somme des valeurs de Ca1 et de Ca2 est égale à la valeur de Ca ; les valeurs des quotes-parts Ca1 et Ca2 sont non-nulles).

Dans ce cas, la première quote-part Ca1 (produite par les moyens électrolyseurs 21) augmente avec la valeur collectée de température Tc.

Réciproquement, la seconde quote-part Ca2 (produite par les moyens injecteurs 22) diminue avec la valeur collectée de température Tc.

De préférence, les moyens de commande 5 comprennent ainsi des moyens de mettre en œuvre les étapes suivantes :

- une étape de calcul de ladite quantité de chlore à apporter Ca (avantageusement via le module de calcul 51), tenant compte de ladite teneur collectée en chlore Cc et d'une teneur consigne en chlore Ct, puis
- une étape de chloration (avantageusement via le module de pilotage 52), tenant compte de ladite valeur collectée de température Tc et des seuils de température TMin, TMax, selon l'une des configurations précitées (configuration injection, configuration électrolyseur ou ladite configuration hybride).

De préférence, le module de pilotage 52 est configuré pour augmenter de manière continue, ou de manière discontinue, la première quote-part Ca1 produite par les moyens électrolyseurs 21.

Selon un premier mode de réalisation préféré, le module de pilotage 52 est configuré pour augmenter de manière continue la première quote-part Ca1 produite par les moyens électrolyseurs 21, parmi :

- une augmentation continue linéaire,
- une augmentation continue logarithmique,
- une augmentation continue exponentielle,
- une augmentation continue polynomiale.

Dans le cas d'une augmentation continue linéaire, la valeur de la première quote-part Ca1 peut être obtenue par la formule suivant :

$$Ca1 = ((Tc - TMin) / (TMax - TMin)) \times 100\%$$

Selon un second mode de réalisation, le module de pilotage 52 est configuré pour augmenter de manière discontinue la première quote-part Ca1 produite par les moyens électrolyseurs 21, avantageusement sous la forme de paliers, par exemple un palier par degré de température.

Un exemple d'augmentation discontinue est détaillé ci-dessous :

- la première quote-part Ca1 est égale à 0% lorsque la valeur collectée de température Tc est inférieure au seuil minimal de température TMin,
- la première quote-part Ca1 augmente de 20 à 30% pour chaque degré de température, entre les seuils de température TMin, TMax, et
- la première quote-part Ca1 est égale à 100% lorsque la valeur collectée de température Tc est supérieure au seuil maximal de température TMax.

Selon l'invention, les moyens de commande 5 comprennent avantageusement un module de calcul additionnel 53, pour déterminer une quantité de chlore additionnel Cd à apporter, tenant compte d'au moins un paramètre additionnel.

Ce paramètre additionnel est choisi par exemple parmi :

- des conditions météorologiques qui ne permettent pas aux moyens électrolyseurs 21 de contrer le développement de bactéries et algues,
- une utilisation intense de la piscine,
- le statut des moyens électrolyseurs 21, notamment des électrodes, en particulier en fin de vie,
- un taux de sel dans l'eau qui est inférieur à un seuil minimal.

En particulier, le suivi des conditions météo permet d'anticiper la déstabilisation de la régulation de chlore et donc d'anticiper le développement de microorganismes indésirés.

Pour cela, les moyens de commande 5 sont avantageusement associés à au moins une interface adaptée à l'apport d'information complémentaire, à savoir par exemple parmi :

- une interface homme-machine (un écran tactile ou non, un clavier, etc.) pour la saisie d'information par un opérateur (par exemple une utilisation intense de la piscine),
- des moyens de détection du statu des moyens électrolyseurs 21,
- des moyens de détection du taux de sel dans l'eau,
- un réseau de télécommunication, pour la transmission de conditions météorologiques.

En pratique, cette quantité de chlore additionnel Cd à apporter est apportée par les moyens injecteurs 22.

Piscine

La présente invention concerne encore la piscine équipée de cette installation de chloration 1.

Une telle installation de chloration 1 peut éventuellement être intégrée dans un système électrique dédié à l'alimentation électrique et au pilotage des équipements électriques d'une piscine, qui est décrit dans le document FR3119186.

Procédé pour la chloration de l'eau d'une piscine

La présente invention concerne encore le procédé pour la chloration de l'eau d'une piscine, par la mise en œuvre de l'installation de chloration 1 selon l'invention.

Ce procédé de chloration comprend une succession d'étapes, illustrées schématiquement sur la figure 3, à savoir :

- une étape de calcul A, pour le calcul de la quantité de chlore à apporter Ca, tenant compte de la teneur collectée en chlore Cc et d'une teneur consigne en chlore Ct,
- une étape de chloration B, tenant compte de la valeur collectée de température Tc et des seuils de température TMin, Tmax.

Cette étape de chloration B s'effectue selon les configurations précitées :

- une configuration injection B1, lorsque ladite valeur collectée de température Tc est inférieure audit seuil minimal de température TMin, dans laquelle lesdits moyens injecteurs 22 sont pilotés pour apporter ladite quantité de chlore à apporter Ca,
- une configuration électrolyseur B2, lorsque la valeur collectée de température Tc est supérieure audit seuil maximal de température TMax, dans laquelle lesdits moyens électrolyseurs 21 sont pilotés pour apporter ladite quantité de chlore à apporter Ca, et
- une configuration hybride B3, lorsque la valeur collectée de température Tc est comprise entre lesdits seuils de température TMin, TMax, dans laquelle lesdits moyens électrolyseurs 21 et lesdits moyens injecteurs 22 sont pilotés pour apporter chacun une quote-part Ca1, Ca2 de ladite quantité de chlore à apporter Ca.

Tel que développé précédemment, dans la configuration hybride B3, la première quote-part Ca1 augmente avec la valeur collectée de température Tc.
Comme abordé précédemment, une telle solution technique selon l'invention permet d'éviter une commutation brutale entre les moyens électrolyseurs 21 et les moyens injecteurs 22, à une température seuil.
Au contraire, elle assure un passage progressif entre les moyens électrolyseurs 21 et les moyens injecteurs 22, sur une plage comprise entre deux températures seuils.
De préférence, ce procédé comprend une étape de chloration complémentaire B5, tenant compte d'au moins un paramètre additionnel.
Ce paramètre additionnel est choisi par exemple parmi :

- des conditions météorologiques qui ne permettent pas aux moyens électrolyseurs 21 de contrer le développement de bactéries et algues,
- une utilisation intense de ladite piscine,
- le statut des moyens électrolyseurs 21 21, notamment des électrodes, en particulier en fin de vie,
- un taux de sel dans l'eau qui est inférieur à un seuil minimal.

Cette étape de chloration complémentaire est avantageusement mise en œuvre par les moyens injecteurs 22.
Bien entendu, diverses autres modifications peuvent être apportées à l'invention dans le cadre des revendications annexées.

**Revendications**

1.   Installation pour la chloration de l'eau d'une piscine,
laquelle installation de chloration (1) comprend :

   - des moyens de chloration (2), pour l'apport de chlore dans ladite eau, comprenant :

      -- des moyens électrolyseurs (21), et
      -- des moyens injecteurs (22), raccordés à un réservoir de chlore,

   - des moyens capteurs de température (3), pour mesurer une valeur collectée de température (Tc) de l'eau de ladite piscine,
   - des moyens de mesure du taux de chlore (4), pour mesurer une teneur collectée en chlore (Cc) de l'eau de ladite piscine, et
   - des moyens de commande (5), comprenant :

      -- un module de calcul (51), pour déterminer une quantité de chlore à apporter Ca tenant compte de ladite teneur collectée en chlore Cc et d'une teneur consigne en chlore Ct, et

-- un module de pilotage (52), pour piloter lesdits moyens de chloration (2) en fonction de ladite quantité de chlore à apporter Ca,

**caractérisée en ce que** ledit module de pilotage (52) est configuré pour répartir ladite quantité de chlore à apporter Ca entre lesdits moyens électrolyseurs (21) et lesdits moyens injecteurs (22), tenant compte de ladite valeur collectée de température Tc et de seuils de température TMin, TMax de l'eau de ladite piscine, à savoir :

- une configuration injection, lorsque ladite valeur collectée de température Tc est inférieure à un seuil minimal de température TMin, dans laquelle lesdits moyens injecteurs (22) sont pilotés pour apporter ladite quantité de chlore à apporter Ca,
- une configuration électrolyseur, lorsque la valeur collectée de température Tc est supérieure à un seuil maximal de température TMax, dans laquelle lesdits moyens électrolyseurs (21) sont pilotés pour produire ladite quantité de chlore à apporter Ca, et
- une configuration hybride, lorsque la valeur collectée de température Tc est comprise entre lesdits seuils de température TMin, TMax, dans laquelle lesdits moyens électrolyseurs (21) et lesdits moyens injecteurs (22) sont pilotés pour apporter chacun une quote-part Ca1, Ca2 de ladite quantité de chlore à apporter Ca,

une première quote-part Ca1 de la quantité de chlore produite par lesdits moyens électrolyseurs (21) augmentant avec ladite valeur collectée de température Tc.

2. Installation pour la chloration de l'eau d'une piscine, selon la revendication 1, **caractérisée en ce que** le seuil minimal de température TMin est de 14 à 16°C et le seuil maximal de température TMax est de 19 à 21°C.

3. Installation pour la chloration de l'eau d'une piscine, selon l'une quelconque des revendications 1 ou 2, **caractérisée en ce que** ledit module de pilotage (52) est configuré pour augmenter de manière continue, ou de manière discontinue, ladite première quote-part Ca1 de la quantité de chlore produite par lesdits moyens électrolyseurs (21).

4. Installation pour la chloration de l'eau d'une piscine, selon la revendication 3, **caractérisée en ce que** ledit module de pilotage (52) est configuré pour augmenter de manière continue ladite première quote-part Ca1 de la quantité de chlore à apporter Ca produite par lesdits moyens électrolyseurs (21), parmi :

- une augmentation continue linéaire,
- une augmentation continue logarithmique,
- une augmentation continue exponentielle,
- une augmentation continue polynomiale.

5. Installation pour la chloration de l'eau d'une piscine, selon la revendication 3, **caractérisée en ce que** ledit module de pilotage (52) est configuré pour augmenter de manière discontinue ladite quote-part de la quantité de chlore produite par lesdits moyens électrolyseurs (21), parmi des paliers, par exemple chaque degré de température.

6. Installation pour la chloration de l'eau d'une piscine, selon l'une quelconque des revendications 1 à 5, **caractérisée en ce que** les moyens de commande (5) comprennent un module de calcul additionnel (53), pour déterminer une quantité de chlore additionnel Cd à apporter, tenant compte d'au moins un paramètre additionnel, lequel paramètre additionnel est choisi par exemple parmi :

- des conditions météorologiques qui ne permettent pas aux moyens électrolyseurs (21) de contrer le développement de bactéries et algues,
- une utilisation intense de ladite piscine,
- le statut des moyens électrolyseurs (21), notamment des électrodes, en particulier en fin de vie,
- un taux de sel dans l'eau qui est inférieur à un seuil minimal.

7. Installation pour la chloration de l'eau d'une piscine, selon l'une quelconque des revendications 1 à 6, **caractérisée en ce que** les moyens de commande (5) comprennent des moyens de mettre en œuvre les étapes suivantes :

- une étape de calcul de ladite quantité de chlore à apporter Ca, tenant compte de ladite teneur collectée en chlore Cc et d'une teneur consigne en chlore Ct,
- une étape de chloration, tenant compte de ladite valeur collectée de température Tc et desdits seuils de température TMin, TMax, selon l'une des configurations choisies parmi ladite configuration injection, ladite

9

configuration électrolyseur et ladite configuration hybride.

8. Installation pour la chloration de l'eau d'une piscine, selon l'une quelconque des revendications 1 à 7, **caractérisée en ce que** les moyens injecteurs comprennent une pompe doseuse de chlore liquide.

9. Piscine équipée d'une installation pour la chloration de l'eau d'une piscine, selon l'une quelconque des revendications 1 à 8.

10. Procédé pour la chloration de l'eau d'une piscine, par la mise en œuvre d'une installation selon l'une quelconque des revendications 1 à 8, **caractérisée en ce qu'**il comprend :

- une étape de calcul de ladite quantité de chlore à apporter Ca, tenant compte de ladite teneur collectée en chlore Cc et d'une teneur consigne en chlore Ct,
- une étape de chloration, tenant compte de ladite valeur collectée de température Tc et desdits seuils de température TMin, TMax, selon l'une des configurations suivantes :

-- une configuration injection, lorsque ladite valeur collectée de température Tc est inférieure audit seuil minimal de température TMin, dans laquelle lesdits moyens injecteurs (22) sont pilotés pour apporter ladite quantité de chlore à apporter Ca,
-- une configuration électrolyseur, lorsque la valeur collectée de température Tc est supérieure audit seuil maximal de température TMax, dans laquelle lesdits moyens électrolyseurs (21) sont pilotés pour apporter ladite quantité de chlore à apporter Ca, et
-- une configuration hybride, lorsque la valeur collectée de température Tc est comprise entre lesdits seuils de température TMin, TMax, dans laquelle lesdits moyens électrolyseurs (21) et lesdits moyens injecteurs (22) sont pilotés pour apporter chacun une quote-part de ladite quantité de chlore à apporter Ca,

la première quote-part Ca1 apportée par lesdits moyens électrolyseurs (21) augmentant avec ladite valeur collectée de température Tc.

11. Procédé pour la chloration de l'eau d'une piscine, selon la revendication 10, **caractérisée en ce qu'**il comprend une étape de chloration complémentaire, tenant compte d'au moins un paramètre additionnel,
lequel paramètre additionnel est choisi par exemple parmi :

- des conditions météorologiques qui ne permettent pas aux moyens électrolyseurs (21) de contrer le développement de bactéries et algues,
- une utilisation intense de ladite piscine,
- le statut des moyens électrolyseurs (21), notamment des électrodes, en particulier en fin de vie,
- un taux de sel dans l'eau qui est inférieur à un seuil minimal.

**Patentansprüche**

1. Anlage für die Chlorierung des Wassers eines Schwimmbeckens,
wobei die Chlorierungsanlage (1)

- Chlorierungsmittel (2) zum Einbringen von Chlor in das Wasser mit:

-- Elektrolysemitteln (21) und
-- mit einer Chlorreserve verbundenen Einspritzmitteln (22),

- Temperaturerfassungsmittel (3) zum Messen eines erfaßten Temperaturwerts (Tc) des Wassers des Schwimmbeckens,
- Chlorgehaltsmeßmittel (4) zum Messen eines erfaßten Chlorgehalts (Cc) des Wassers des Schwimmbeckens und
- Steuerungsmittel (5) mit:

-- einem Rechenmodul (51) zum Bestimmen einer einzubringenden Chlormenge Ca unter Berücksichtigung des erfaßten Chlorgehalts Cc und eines Sollchlorgehalts Ct und

-- einem Steuerungsmodul (52) zum Steuern der Chlorierungsmittel (2) in Abhängigkeit von der einzubringenden Chlormenge Ca

aufweist,

**dadurch gekennzeichnet, daß** das Steuerungsmodul (52) dazu ausgelegt ist, die einzubringende Chlormenge Ca unter Berücksichtigung des erfaßten Temperaturwerts Tc und der Temperaturschwellwerte TMin, TMax des Wassers des Schwimmbeckens zwischen den Elektrolysemitteln (21) und den Einspritzmitteln (22) aufzuteilen, und zwar:

- eine Einspritzkonfiguration, wenn der erfaßte Temperaturwert Tc unter einem unteren Temperaturschwellwert TMin liegt, bei der die Einspritzmittel (22) gesteuert werden, um die einzubringende Chlormenge Ca einzubringen,
- eine Elektrolysekonfiguration, wenn der erfaßte Temperaturwert Tc über einem oberen Temperaturschwellwert TMax liegt, bei der die Elektrolysemittel (21) gesteuert werden, um die einzubringende Chlormenge Ca zu erzeugen, und
- eine hybride Konfiguration, wenn der erfaßte Temperaturwert Tc zwischen den Temperaturschwellwerten TMin, TMax liegt, bei der die Elektrolysemittel (21) und die Einspritzmittel (22) so gesteuert werden, daß jeder einen Anteil Ca1, Ca2 der einzubringenden Chlormenge Ca einbringt,

wobei ein erster Anteil Ca1 der durch die Elektrolysemittel (21) erzeugten Chlormenge mit dem erfaßten Temperaturwert Tc ansteigt.

2. Anlage für die Chlorierung des Wassers eines Schwimmbeckens gemäß Anspruch 1, **dadurch gekennzeichnet, daß** der untere Temperaturschwellwert 14 bis 16 °C beträgt und daß der obere Temperaturschwellwert 19 bis 21 °C beträgt.

3. Anlage für die Chlorierung des Wassers eines Schwimmbeckens gemäß einem der Ansprüche 1 oder 2, **dadurch gekennzeichnet, daß** das Steuerungsmodul (52) dazu ausgelegt ist, den ersten Anteil Ca1 der durch die Elektrolysemittel (21) erzeugten Chlormenge kontinuierlich oder diskontinuierlich zu erhöhen.

4. Anlage für die Chlorierung des Wassers eines Schwimmbeckens gemäß Anspruch 3, **dadurch gekennzeichnet, daß** das Steuerungsmodul (52) dazu ausgelegt ist, den ersten Anteil Ca1 der durch die Elektrolysemittel (21) erzeugten einzubringenden Chlormenge Ca kontinuierlich zu erhöhen, wahlweise durch:

- eine kontinuierliche lineare Erhöhung,
- eine kontinuierliche logarithmische Erhöhung,
- eine kontinuierliche exponentielle Erhöhung,
- eine kontinuierliche polynomiale Erhöhung.

5. Anlage für die Chlorierung des Wassers eines Schwimmbeckens gemäß Anspruch 3, **dadurch gekennzeichnet, daß** das Steuerungsmodul (52) dazu ausgelegt ist, den Anteil der durch die Elektrolysemittel (21) erzeugten Chlormenge diskontinuierlich, und zwar stufenweise, zum Beispiel bei jedem Temperaturgrad, zu erhöhen.

6. Anlage für die Chlorierung des Wassers eines Schwimmbeckens gemäß einem der Ansprüche 1 bis 5, **dadurch gekennzeichnet, daß** die Steuerungsmittel (5) ein zusätzliches Rechenmodul (53) aufweisen, um eine zusätzliche einzubringende Chlormenge Cd unter Berücksichtigung mindestens eines zusätzlichen Parameters zu berechnen, wobei der zusätzliche Parameter zum Beispiel aus

- meteorologischen Bedingungen, die den Elektrolysemitteln (21) nicht ermöglichen, der Entwicklung von Bakterien und Algen entgegenzuwirken,
- einer intensiven Nutzung des Schwimmbeckens,
- dem Zustand der Elektrolysemittel (21), insbesondere der Elektroden, insbesondere am Nutzungsende,
- einem Salzgehalt im Wasser, der kleiner als ein unterer Schwellwert ist, ausgewählt ist.

7. Anlage für die Chlorierung des Wassers eines Schwimmbeckens gemäß einem der Ansprüche 1 bis 6, **dadurch gekennzeichnet, daß** die Steuerungsmittel (5) Mittel zur Durchführung der folgenden Schritte aufweisen:

- eines Schritts des Berechnens der einzubringenden Chlormenge Ca unter Berücksichtigung des erfaßten Chlorgehalts Cc und eines Sollchlorgehalts Ct,
- eines Chlorierungsschritts unter Berücksichtigung des erfaßten Temperaturwerts Tc und der Temperaturschwellwerte TMin, TMax gemäß einer der unter der Einspritzkonfiguration, der Elektrolysekonfiguration und der hybriden Konfiguration ausgewählten Konfigurationen.

8. Anlage für die Chlorierung des Wassers eines Schwimmbeckens gemäß einem der Ansprüche 1 bis 7, **dadurch gekennzeichnet, daß** die Einspritzmittel eine Dosierpumpe für flüssiges Chlor aufweisen.

9. Schwimmbecken mit einer Anlage für die Chlorierung des Wassers eines Schwimmbeckens gemäß einem der Ansprüche 1 bis 8.

10. Verfahren für die Chlorierung des Wassers eines Schwimmbeckens durch Betreiben einer Anlage gemäß einem der Ansprüche 1 bis 8, **dadurch gekennzeichnet, daß** es

- einen Schritt des Berechnens der zuzuführenden Chlormenge Ca unter Berücksichtigung des erfaßten Chlorgehalts Cc und eines Chlorsollgehalts Ct,
- einen Schritt der Chlorierung unter Berücksichtigung des erfaßten Temperaturwerts Tc und der Temperaturschwellwerte TMin, TMax gemäß einer der folgenden Konfigurationen aufweist:
- eine Einspritzkonfiguration, wenn der erfaßte Temperaturwert Tc unter einem unteren Temperaturschwellwert TMin liegt, bei der die Einspritzmittel (22) gesteuert werden, um die einzubringende Chlormenge Ca einzubringen,
- eine Elektrolysekonfiguration, wenn der erfaßte Temperaturwert Tc über einem oberen Temperaturschwellwert TMax liegt, bei der die Elektrolysemittel (21) gesteuert werden, um die einzubringende Chlormenge Ca zu erzeugen, und
- eine hybride Konfiguration, wenn der erfaßte Temperaturwert Tc zwischen den Temperaturschwellwerten TMin, TMax liegt, bei der die Elektrolysemittel (21) und die Einspritzmittel (22) so gesteuert werden, daß jeder einen Anteil Ca1, Ca2 der einzubringenden Chlormenge Ca einbringt,

wobei der erste Anteil Ca1 der durch die Elektrolysemittel (21) erzeugten Chlormenge mit dem erfaßten Temperaturwert Tc ansteigt.

11. Verfahren für die Chlorierung des Wassers eines Schwimmbeckens gemäß Anspruch 10, **dadurch gekennzeichnet, daß** es einen zusätzlichen Chlorierungsschritt unter Berücksichtigung mindestens eines zusätzlichen Parameters aufweist:

- meteorologische Bedingungen, die den Elektrolysemitteln (21) nicht ermöglichen, der Entwicklung von Bakterien und Algen entgegenzuwirken,
- eine intensive Nutzung des Schwimmbeckens,
- der Zustand der Elektrolysemittel (21), insbesondere der Elektroden, insbesondere am Nutzungsende,
- ein Salzgehalt im Wasser, der kleiner als ein unterer Schwellwert ist.

**Claims**

1. System for the chlorination of the water of a swimming pool, said chlorination system (1) comprising:

- chlorination means (2) for adding chlorine to said water, comprising:

-- electrolyzing means (21) and
-- injection means (22) connected to a chlorine tank,

- temperature sensor means (3) for measuring a captured temperature (Tc) of the water of the swimming pool,
- means for measuring the chlorine content (4) for measuring a captured chlorine content (Cc) of the water of the swimming pool and
- control means (5) comprising:

-- a calculating module (51) for determining a quantity of chlorine Ca to be added, taking into account the captured chlorine content Cc and a set content of chlorine Ct, and

-- a control module (52) for controlling said chlorination means (2) depending on the quantity of chlorine Ca to be added,

**characterized in that** said control module (52) is configured for dividing said quantity of chlorine Ca to be added between said electrolyzing means (21) and said injection means (22), taking into account said captured value Tc of the temperature and set temperature values TMin, TMax of the water of the swimming pool, i.e.:

- an injection configuration when said captured value Tc of the temperature is lower than a set minimum temperature TMin, in which said injection means (22) are controlled for adding said quantity of chlorine Ca to be added,
- an electrolyzing configuration when said captured value Tc of the temperature is higher than a set maximum temperature TMax, in which said electrolyzing means (21) are controlled for producing said quantity of chlorine Ca to be added, and
- a hybrid configuration when the captured value Tc of the temperature is between said set values TMin, TMax of the temperature, in which said electrolyzing means (21) and said injection means (22) are controlled for each adding a respective proportion Ca1, Ca2 of said quantity of chlorine Ca to be added, a first proportion Ca1 of the quantity produced by said electrolyzing means (21) increasing with said captured value Tc of the temperature.

2. System for the chlorination of the water of a swimming pool according to claim 1, **characterized in that** said minimum temperature TMin is from 14 to 16 °C and **in that** said set maximum temperature TMax is from 19 to 21 °C.

3. System for the chlorination of the water of a swimming pool according to anyone of claims 1 or 2, **characterized in that** said control module (52) is configured for increasing continuously or discontinuously said first proportion Ca1 of the quantity of chlorine produced by said electrolyzing means (21).

4. System for the chlorination of the water of a swimming pool according to claim 3, **characterized in that** said control module (52) is configured for increasing continuously said first proportion Ca1 of the quantity of chlorine Ca to be added amongst:

- a linear continuous increase,
- a logarithmic continuous increase,
- an exponential continuous increase,
- a polynomial continuous increase.

5. System for the chlorination of the water of a swimming pool according to claim 3, **characterized in that** said control module (52) is configured for increasing discontinuously said proportion of the quantity of chlorine produced by said electrolyzing means (21) amongst steps, e.g. each degree of the temperature.

6. System for the chlorination of the water of a swimming pool according to anyone of claims 1 to 5, **characterized in that** the control means (5) comprise an additional calculating module (53) for determining an additional quantity of chlorine Cd to be added, taking into account at least one additional parameter, said additional parameter being selected from:

- meteorological conditions which do not allow the electrolyzing means (21) to counteract the development of bacteria and algae,
- an intensive utilization of the swimming pool,
- the state of the electrolyzing means (21), especially of the electrodes, and especially at the end of life,
- a salt content in the water which is lower than a set minimum.

7. System for the chlorination of the water of a swimming pool according to anyone of claims 1 to 6, **characterized in that** the control means (5) comprise means for carrying out the following steps:

- a calculating step for calculating the quantity of chlorine Ca to be added, taking into account the captured content of chlorine Cc and a set value of chlorine Ct,
- a chlorination step, taking into account the captured value Tc of the temperature and the set temperatures TMin, TMax according to the selected configurations amongst said injection configuration, said electrolyzing configuration, and said hybrid configuration.

8. System for the chlorination of the water of a swimming pool according to anyone of claims 1 to 7, **characterized in that** the injection means comprise a metering pump for liquid chlorine.

9. Swimming pool provided with a system for the chlorination of the water of a swimming pool according to anyone of claims 1 to 8.

10. Process for the chlorination of the water of a swimming pool by implementing a system according to anyone of claims 1 to 8, **characterized in that** it comprises:

- a step of calculating said quantity of chlorine Ca to be added, taking into account the captured content Cc of chlorine and a set content Ct of chlorine,
- a step of chlorination, taking into account the captured value Tc of the temperature and set temperature TMin, TMax according to one of the following configurations:

-- an injection configuration when said captured value Tc of the temperature is lower than a set minimum temperature TMin, in which said injection means (22) are controlled for adding said quantity of chlorine Ca to be added,
-- an electrolyzing configuration when said captured value Tc of the temperature is higher than a set maximum temperature TMax, in which said electrolyzing means (21) are controlled for producing said quantity of chlorine Ca to be added, and
-- a hybrid configuration when the captured value Tc of the temperature is between said set values TMin, TMax of the temperature, in which said electrolyzing means (21) and said injection means (22) are controlled for each adding a respective proportion Ca1, Ca2 of said quantity of chlorine to be added,
a first proportion Ca1 of the quantity produced by said electrolyzing means (21) increasing with said captured value Tc of the temperature.

11. Process for the chlorination of the water of a swimming pool according to claim 10, **characterized in that** it comprises a step of complementary chlorination, taking into account at least one additional parameter,
said additional parameter being selected for example amongst:

- meteorological conditions which do not allow the electrolyzing means (21) to counteract the development of bacteria and algae,
- an intensive utilization of the swimming pool,
- the state of the electrolyzing means (21), especially of the electrodes, and especially at the end of life,
- a salt content in the water which is lower than a set minimum.

**Fig.1**

1

5

3

4

51

52;521;522

2;21

2;22

53

**Fig.2**

Tc

Cc

Ct

TMin;TMax

52;521

51

Ca1;Ca2

Ca

Cd

52;522

53

21    22

**Fig.3**

A

B

B1

B2

B3

B5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3069860 A1
- EP 2273039 A1
- FR 3119186 A1
- FR 3119186